# EUROPÄISCHE PATENTSCHRIFT

(11) **EP 3 310 599 B1**
(45) Veröffentlichungstag und Bekanntmachung des Hinweises auf die Patenterteilung: **17.04.2019**
(21) Anmeldenummer: 16724405.2
(22) Anmeldetag: 20.05.2016
(51) Int. Cl.: B60J 1/20

(54) **KRAFTFAHRZEUG-TÜR**
MOTOR-VEHICLE DOOR
PORTE DE VÉHICULE AUTOMOBILE

(30) Priorität: 17.06.2015 DE 102015007651
(43) Veröffentlichungstag der Anmeldung: 25.04.2018
(73) Patentinhaber: BOS GmbH & Co. KG, 73760 Ostfildern (DE)
(72) Erfinder: ZIMMERMANN, Gerald, 73113 Ottenbach (DE); HINTENNACH, Markus, 73666 Baltmannsweiler (DE)
(74) Vertreter: Patentanwälte Ruff, Wilhelm, Beier, Dauster & Partner mbB
(86) Internationale Anmeldenummer: PCT/EP2016/061410
(87) Internationale Veröffentlichungsnummer: WO 2016/202526

(56) Entgegenhaltungen:
- DE-A1-102005 057 248
- DE-C1- 4 320 467
- DE-U1-202004 020 095
- DE-U1-202005 020 607
- FR-A1- 2 882 696

## Beschreibung

Die Erfindung betrifft eine Kraftfahrzeug-Tür mit einer Scheibenanordnung, die in einer Türkarosseriestruktur integriert ist, sowie mit einer der Scheibenanordnung türinnenseitig zugeordneten Beschattungsvorrichtung mit mehreren Funktionskomponenten, und mit einer die Beschattungsvorrichtung zumindest abschnittsweise überdeckenden Türinnenverkleidung, die eine Türinnenbrüstung umfasst und an der Türkarosseriestruktur befestigt ist.

Eine derartige Kraftfahrzeug-Tür ist für Personenkraftwagen allgemein bekannt. FR 2 882 696 A1 zeigt eine derartige Kraftfahrzeug-Tür. Die Kraftfahrzeug-Tür weist eine in einem Scheibenrahmen einer Türkarosseriestruktur gehaltene Scheibenanordnung auf. Fahrzeuginnenseitig ist der Scheibenanordnung eine Beschattungsvorrichtung zugeordnet, die ein auf einer Wickelwelle auf- und abwickelbares, flexibles Beschattungsgebilde umfasst. Das Beschattungsgebilde überdeckt in einer Beschattungsposition die Scheibenanordnung zumindest weitgehend. In einer Ruheposition ist das Beschattungsgebilde auf die Wickelwelle aufgewickelt, die unterhalb einer Türbrüstung an der Türkarosseriestruktur drehbar gelagert ist. Das Beschattungsgebilde weist an seinem in Auszugrichtung vorderen Stirnendbereich ein formstabiles Auszugprofil auf, das in seitlichen Führungsschienen höhenverlagerbar geführt ist. Die seitlichen Führungsschienen erstrecken sich längs der Scheibenanordnung und sind an dem Scheibenrahmen und demzufolge an der Türkarosseriestruktur befestigt. Zum Fahrzeuginnenraum hin ist eine Innenseite der Türkarosseriestruktur durch eine Türinnenverkleidung verdeckt, die im Wesentlichen ästhetische Funktionen hat.

Aufgabe der Erfindung ist es, eine Kraftfahrzeug-Tür der eingangs genannten Art zu schaffen, die eine einfache, funktionssichere und toleranzarme Montage der Beschattungsvorrichtung ermöglicht.

Diese Aufgabe wird dadurch gelöst, dass die Türinnenverkleidung ein Trägermodul aufweist, an dem die Funktionskomponenten der Beschattungsvorrichtung angeordnet sind, und das an der Türkarosseriestruktur befestigt ist, wobei das Trägermodul Rahmenabschnitte für die Scheibenanordnung aufweist, denen Führungsschienen der Beschattungsvorrichtung zugeordnet sind. Das Trägermodul dient zur Montage aller Funktionskomponenten der Beschattungsvorrichtung, so dass die Beschattungsvorrichtung an dem Trägermodul zu einer vormontierten Baueinheit zusammenbaubar ist. Das vormontierte Trägermodul muss dann lediglich noch mit der Türkarosseriestruktur verbunden werden, ohne dass aufwändige Justier- und Montagearbeiten an der Kraftfahrzeug-Tür selbst durchgeführt werden müssen. Die durch das Trägermodul mit den montierten Funktionskomponenten vormontierte Baueinheit kann fertig montiert an ein Montageband eines entsprechenden Herstellers der Kraftfahrzeug-Tür angeliefert werden, ohne dass weitere Funktionskomponenten der Beschattungsvorrichtung umständlich an der Türkarosseriestruktur montiert werden müssen. Herstellungs- und Montagetoleranzen beim Anbau der Beschattungsvorrichtung an die Kraftfahrzeug-Tür, wie sie beim Stand der Technik zu berücksichtigen sind, können erfindungsgemäß reduziert oder vermieden werden. Falls die Beschattungsvorrichtung mittels eines Antriebssystems betrieben wird, so umfassen die Funktionskomponenten, die an dem Trägermodul angeordnet sind, auch entsprechende Komponenten des Antriebssystems. Nach der Montage des entsprechenden Trägermoduls an der Kraftfahrzeug-Tür muss dann lediglich noch die elektrische Kontaktierung zu einem Bordstromnetz des Kraftfahrzeugs erfolgen, um die Funktionsfähigkeit der Beschattungsvorrichtung sicherzustellen. Durch die erfindungsgemäße Lösung können Verspannungen, Reibungsverluste des Antriebssystems oder der Führung des Beschattungsgebildes wie auch ein Faltenwurf des Beschattungsgebildes vermieden werden, die beim Stand der Technik durch umständliche Montage und Anpassung an entsprechende Abschnitte der Türkarosseriestruktur entstehen konnten. Die Beschattungsvorrichtung kann manuell oder mittels des Antriebssystems bedienbar sein.

In weiterer Ausgestaltung der Erfindung weist das Trägermodul die Türinnenbrüstung auf. Die Türinnenbrüstung bildet eine Begrenzung der Scheibenanordnung der Kraftfahrzeug-Tür nach unten.

Der Erfindung weist das Trägermodul Rahmenabschnitte für die Scheibenanordnung auf, denen Führungsschienen der Beschattungsvorrichtung zugeordnet sind. Das Trägermodul erstreckt sich demzufolge auch über die Türinnenbrüstung in den Bereich der Scheibenanordnung nach oben, wobei das Trägermodul türinnenseitige Rahmenabschnitte des Scheibenrahmens bildet, in denen Führungsschienen integriert sind, die zur Führung eines Auszugprofils eines Beschattungsgebildes der Beschattungsvorrichtung dienen. In den Rahmenbereichen können auch Antriebsübertragungsmittel wie insbesondere Gewindesteigungskabel eines Antriebssystems für die Beschattungsvorrichtung geführt sein.

In weiterer nicht beanspruchten Ausgestaltung der Erfindung weist das Trägermodul im Bereich der Türinnenbrüstung einen Durchtritt für ein flexibles Beschattungsgebilde sowie ein beweglich gelagertes Schließteil auf, um den Durchtritt zu verschließen oder freizugeben. Das bewegliche Schließteil ist vorzugsweise eine schwenkbewegliche Klappe, die abhängig von einem Hindurchführen des Auszugprofils des Beschattungsgebildes und des Beschattungsgebildes selbst geöffnet und geschlossen werden kann. Vorteilhaft ist das beweglich gelagerte Schließteil abhängig von einer Ansteuerung eines Antriebssystems der Beschattungsvorrichtung steuerbar.

In weiterer Ausgestaltung der Erfindung weist das Trägermodul Lager- oder Befestigungspunkte für eine Wickelwelle des Beschattungsgebildes sowie für ein Antriebssystem der Beschattungsvorrichtung auf. Die Lager- oder Befestigungspunkte können einstückig am Trägermodul angeformt oder als separate Bauteile an dem Trägermodul montiert sein.

In weiterer Ausgestaltung der Erfindung ist das Trägermodul auf einer zu einem Fahrzeuginnenraum gewandten Innenseite mit einer auf eine Fahrzeuginnenverkleidung abgestimmten Innenverkleidungsanordnung versehen. Die Innenverkleidungsanordnung ist in ästhetischer, designerischer Gestaltung an die Fahrzeuginnenverkleidung angepasst, um eine stimmige ästhetische und designtechnische Integration der Innenseite der Kraftfahrzeug-Tür in die Gesamtanmutung der Fahrzeuginnenausstattung zu ermöglichen.

In weiterer Ausgestaltung der Erfindung weist das Trägermodul wenigstens eine Halterung auf, um an der Türkarosseriestruktur insbesondere lösbar befestigt zu werden. Die wenigstens eine Halterung kann einstückig in das Trägermodul integriert sein. Die Halterung kann insbesondere durch Rastelemente verwirklicht sein, die mit komplementären Rastelementen im Bereich der Türkarosseriestruktur zusammenwirken. Dadurch ist eine einfache Montage der vormontierten Baueinheit aus Trägermodul und allen Funktionskomponenten der Beschattungsvorrichtung im Bereich der Innenseite der Kraftfahrzeug-Tür ermöglicht.

In weiterer Ausgestaltung der Erfindung ist das Trägermodul als einteiliges Kunststoffbauteil gestaltet. In dem Kunststoffbauteil können die wenigstens eine Halterung sowie entsprechende Lager- oder Befestigungspunkte für Funktionskomponenten der Beschattungsvorrichtung integriert sein.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer, perspektivischer Darstellung eine Ausführungsform einer erfindungsgemäßen Kraftfahrzeug-Tür für einen Personenkraftwagen und
- Fig. 2: in schematischer Ansicht ein Trägermodul für die Kraftfahrzeug-Tür nach Fig. 1.

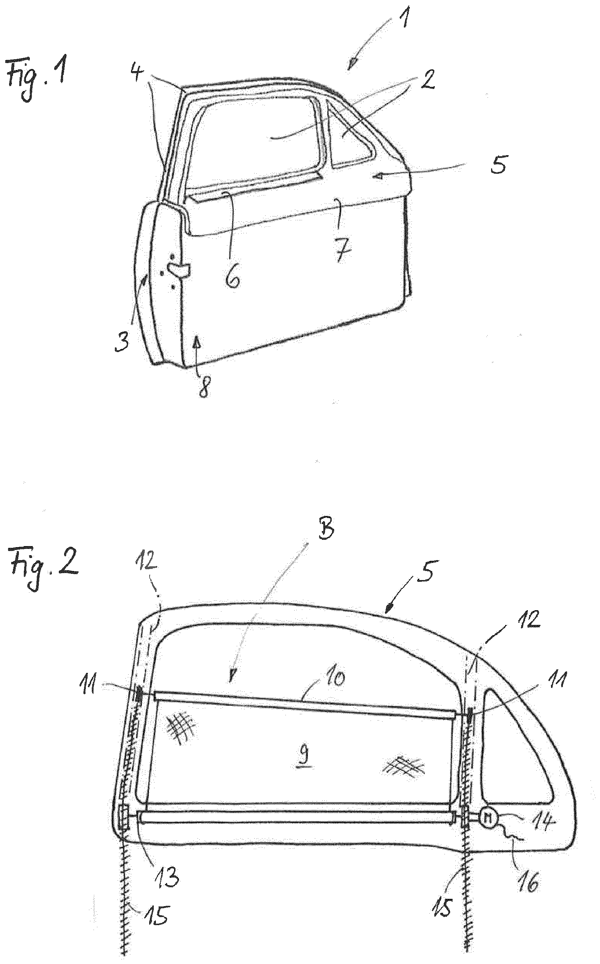

Eine Kraftfahrzeug-Tür 1 nach Fig. 1 ist für einen Personenkraftwagen vorgesehen. Die Kraftfahrzeug-Tür 1 ist beim dargestellten Ausführungsbeispiel eine fondseitige Seitentür des Personenkraftwagens. Die Kraftfahrzeug-Tür 1 weist oberhalb einer Türinnenbrüstung 7 eine Scheibenanordnung 2 auf, die in einem Scheibenrahmen 4 einer Türkarosseriestruktur 3 untergebracht ist. Wenigstens eine Scheibe der Scheibenanordnung 2 kann in der Türkarosseriestruktur 3 versenkbar ausgeführt sein. Der Scheibenanordnung 2 ist türinnenseitig eine Beschattungsvorrichtung B zugeordnet, die anhand der Fig. 2 erkennbar ist. Die Beschattungsvorrichtung B ist in einem formstabilen Trägermodul 5 integriert, das von einer Türinnenseite her an der Türkarosseriestruktur 3 im Bereich des Scheibenrahmens 4 sowie auf Höhe der Türinnenbrüstung 7 befestigt ist. Das Trägermodul 5 weist im Bereich der Scheibenanordnung 2 zwei Aussparungen auf, die auf die Abmessungen der Scheibenanordnung abgestimmt sind. Die Aussparungen sind durch Rahmenabschnitte umgeben, die an entsprechende Rahmenabschnitte des Scheibenrahmens 4 angepasst sind. Die Rahmenabschnitte sind einstückige Bestandteile des Trägermoduls 5, das beim dargestellten Ausführungsbeispiel als einteiliges, formstabiles Kunststoffbauteil ausgeführt ist.

Das Trägermodul 5 weist im Bereich einer Unterseite der Aussparung für die größere Scheibe der Scheibenanordnung 2 ein bewegliches Schließteil 6 auf, das als an dem Trägermodul 5 schwenkbeweglich gelagerte Klappe gestaltet ist. Das Schließteil 6 ist im Bereich einer Oberseite der Türinnenbrüstung 7 vorgesehen und erstreckt sich im Wesentlichen über eine gesamte Länge der größeren Scheibe der Scheibenanordnung 2 - in Fahrzeuglängsrichtung gesehen. Das Schließteil 6 verschließt in geschlossener Stellung einen Durchtritt, durch den hindurch ein Beschattungsgebilde 9 der Beschattungsvorrichtung B nach oben ausgefahren werden kann. Das Beschattungsgebilde 9 ist auf einer Wickelwelle 13 auf- und abwickelbar gehalten, die an zwei nicht dargestellten Lagerpunkten des Trägermoduls 5 drehbar gelagert ist. Die Wickelwelle 13 ist an dem Trägermodul 5 innenseitig, d.h. auf einer zur Türkarosseriestruktur 4 gewandten Seite, gelagert. Ebenfalls auf dieser Innenseite ist ein Antriebsmotor 14 eines Antriebssystems an dem Trägermodul 5 befestigt, der über ein nicht näher bezeichnetes Getriebe zwei Antriebsübertragungsmittel 15 in Form von Gewindesteigungskabeln synchron zueinander antreibt. Hierzu sind beiden Gewindesteigungskabeln 15 Schneckenräder zugeordnet, die auf einer gemeinsamen Achse angeordnet sind, und zwar auf gegenüberliegenden Stirnseiten der Wickelwelle 13. Die Schneckenräder sind koaxial zu der Drehachse der Wickelwelle 13 ausgerichtet. Die Wickelwelle 13 ist beim dargestellten Ausführungsbeispiel als Synchronisationswelle für die beiden Schneckenräder ausgeführt, so dass ein Antrieb über den Antriebsmotor 14 zwangsläufig eine Drehung beider Schneckenräder und demzufolge eine Längsverlagerung beider Gewindesteigungskabel 15 bewirkt. Der Antriebsmotor 14 ist als Elektromotor ausgeführt. Die Gewindesteigungskabel 15 sind in Führungsschienen 12 in Rahmenabschnitten des Trägermoduls 5 verlegt, wobei die Führungsschienen 12 sich im Wesentlichen in Fahrzeughochrichtung auf gegenüberliegenden Seiten der Aussparung für die größere Scheibe der Scheibenanordnung 2 erstrecken. Die Führungsschienen 12 sind entweder einstückig nach Art von nutförmigen Profilierungen in dem Trägermodul 5 ausgeformt, oder die Führungsschienen 12 sind als separate Führungsprofile innenseitig an dem Trägermodul 5 im Bereich der Rahmenabschnitte befestigt. In den Führungsschienen 12 ist jeweils ein Führungsglied 11 linearbeweglich geführt. Die Führungsglieder 11 sind gegenüberliegenden Stirnseiten eines formstabilen Auszugprofils 10 zugeordnet, das an einem in Auszugrichtung vorderen Stirnendbereich des bahnförmigen Beschattungsgebildes 9 befestigt ist. Das Auszugprofil 10 ist zwischen einer in dem durch das Schließteil 6 verschließbaren Durchtritt versenkten Ruhestellung und einer nach oben bis zu einem oberen Rahmenabschnitt des Trägermoduls 5 verfahrenen Funktionsstellung parallelverlagerbar, indem die Führungsglieder 11 mittels der Gewindesteigungskabel 15 in den Führungsschienen 12 längsverfahren werden. Alle Funktionskomponenten der Beschattungsvorrichtung B, d.h. die Wickelwelle 13 mit dem Beschattungsgebilde 9 und dem Auszugprofil 10, die Führungsschienen 12, die Führungsglieder 11, die Gewindesteigungskabel 15 sowie weitere Komponenten des Antriebssystems wie der Antriebsmotor 14 und das zugeordnete Getriebe mit den Schneckenrädern sind über entsprechende Befestigungs- oder Lagerpunkte an dem Trägermodul 5 innenseitig angeordnet und befestigt. Unter innenseitig ist bezüglich des Trägermoduls 5 die vom Fahrzeuginnenraum weg zu der Türkarosseriestruktur 3 mit dem Scheibenrahmen 4 gewandte Seite zu verstehen. Auf der gegenüberliegenden, dem Fahrzeuginnenraum zugewandten Seite ist das Trägermodul 5 mit einer auf die Fahrzeuginnenverkleidung abgestimmten Fläche versehen, die mit einer Innenverkleidungsanordnung in Form einer Beschichtung und/oder eines Überzugs versehen sein kann, wobei die Innenverkleidungsanordnung ästhetisch und designtechnisch auf die Gestaltung der übrigen Fahrzeuginnenverkleidung abgestimmt ist.

Das Trägermodul 5 ist einschließlich aller Funktionskomponenten der Beschattungsvorrichtung B funktionsfertig vormontierbar, bevor das mit der Beschattungsvorrichtung B versehene Trägermodul 5 innenseitig an die Türkarosseriestruktur 3, 4 angebracht wird. Hierzu weist das Trägermodul 5 mehrere Halterungen auf, die anhand der Fig. 1 und 2 nicht erkennbar sind. Die Halterungen können durch mechanische Rastanordnungen und/oder durch zusätzliche, mittels eines Werkzeugs bedienbare Befestigungsanordnungen gebildet sein, die jeweils komplementär im Bereich der Türkarosseriestruktur 3 einschließlich des Scheibenrahmens 4 und im Bereich des Trägermoduls 5 vorgesehen sind. Falls die Halterungen durch Rastanordnungen gebildet sind, ist es vorteilhaft möglich, das fertig vormontierte Trägermodul 5 werkzeuglos mit der Türkarosseriestruktur 3 zu verbinden, indem das Trägermodul 5 mit der Türkarosseriestruktur verrastet wird.

Beim dargestellten Ausführungsbeispiel gemäß den Fig. 1 und 2 erstreckt sich das Trägermodul 5 lediglich über einen oberen Bereich der Türkarosseriestruktur 3, d.h. im Wesentlichen über Höhe und Breite des Scheibenrahmens 4 und der Scheibenanordnung 2 bis auf Höhe der Türinnenbrüstung 7. Bei einem nicht dargestellten Ausführungsbeispiel der Erfindung ist das Trägermodul über die gesamte Höhe und Breite einer Türkarosseriestruktur erstreckt, d.h. bis zu einem unteren Endbereich der Türkarosseriestruktur. Damit bildet das Trägermodul eine komplette Innenseite der Kraftfahrzeug-Tür.

Sobald das Trägermodul 5 an der Türkarosseriestruktur 3 montiert ist, muss lediglich noch eine Kontaktierung von Stromversorgungs- und Steuerleitungen 16 für das Antriebssystem der Beschattungsvorrichtung B mit einem fahrzeugseitigen Bordstromnetz und einer fahrzeugseitigen Steuerung erfolgen, um die Beschattungsvorrichtung B betriebsfertig vorzubereiten.

## Patentansprüche

1. Kraftfahrzeug-Tür (1) mit einer Scheibenanordnung (2), die in einer Türkarosseriestruktur (3) integriert ist, sowie mit einer der Scheibenanordnung (2) türinnenseitig zugeordneten Beschattungsvorrichtung (B) mit mehreren Funktionskomponenten, und mit einer die Beschattungsvorrichtung (B) zumindest abschnittsweise überdeckenden Türinnenverkleidung, die eine Türinnenbrüstung (7) umfasst und an der Türkarosseriestruktur (3) befestigt ist, wobei die Türinnenverkleidung ein Trägermodul (5) aufweist, an dem die Funktionskomponenten der Beschattungsvorrichtung (B) angeordnet sind, und das an der Türkarosseriestruktur (3) befestigt ist, **dadurch gekennzeichnet, dass** das Trägermodul (5) Rahmenabschnitte für die Scheibenanordnung aufweist, denen Führungsschienen (12) der Beschattungsvorrichtung (B) zugeordnet sind.

2. Kraftfahrzeug-Tür nach Anspruch 1, **dadurch gekennzeichnet, dass** das Trägermodul (5) die Türinnenbrüstung (7) aufweist.

3. Kraftfahrzeug-Tür nach einem der vorhergehenden Ansprüche, **dadurch gekennzeichnet, dass** das Trägermodul (5) Lager- oder Befestigungspunkte für eine Wickelwelle (13) des Beschattungsgebildes (9) sowie für ein Antriebssystem der Beschattungsvorrichtung (B) aufweist.

4. Kraftfahrzeug-Tür nach einem der vorhergehenden Ansprüche, **dadurch gekennzeichnet, dass** das Trägermodul (5) auf einer zu einem Fahrzeuginnenraum gewandten Innenseite mit einer auf eine Fahrzeuginnenverkleidung abgestimmten Innenverkleidungsanordnung versehen ist.

5. Kraftfahrzeug-Tür nach einem der vorhergehenden Ansprüche, **dadurch gekennzeichnet, dass** das Trägermodul (5) wenigstens eine Halterung aufweist, um an der Türkarosseriestruktur (3) insbesondere lösbar befestigt zu werden.

6. Kraftfahrzeug-Tür nach einem der vorhergehenden Ansprüche, **dadurch gekennzeichnet, dass** das Trägermodul (5) als einteiliges, formstabiles Kunststoffbauteil gestaltet ist.

## Claims

1. Motor vehicle door (1) having a window arrangement (2) which is integrated into a door body structure (3), and having a shading device (B), assigned to the window arrangement (2) on the inner side of the door, with a plurality of functional components, and having a door interior trim at least partially covering the shading device (B), said door interior trim comprising a door interior breastwork (7) and being fastened to the door body structure (3), wherein the door interior trim has a carrier module (5) on which the functional components of the shading device (B) are arranged and which is fastened to the door body structure (3),
**characterized in that**
the carrier module (5) has frame portions for the window arrangement, guide rails (12) of the shading device (B) being assigned to said frame portions.

2. Motor vehicle door according to claim 1, **characterized in that** the carrier module (5) has the door interior breastwork (7).

3. Motor vehicle door according to any of the preceding claims, **characterized in that** the carrier module (5) has mounting or fastening points for a winding shaft (13) of the shading structure (9) and also for a drive system of the shading device (B).

4. Motor vehicle door according to any of the preceding claims, **characterized in that** the carrier module (5) is provided, on an inner side facing a vehicle interior, with an interior trim arrangement coordinated with a vehicle interior trim.

5. Motor vehicle door according to any of the preceding claims, **characterized in that** the carrier module (5) has at least one holder in order to be fastened, in particular releasably, to the door body structure (3).

6. Motor vehicle door according to any of the preceding claims, **characterized in that** the carrier module (5) is designed as an integral, dimensionally stable plastics component.

## Revendications

1. Porte de véhicule automobile (1) comprenant un arrangement de vitre (2) intégré dans une structure de carrosserie de porte (3), ainsi que comprenant un dispositif d'ombrage (B) associé à l'arrangement de vitre (2) sur le côté intérieur de la porte avec une pluralité de composants fonctionnels, et comprenant un revêtement intérieur de porte recouvrant le dispositif d'ombrage (B) au moins par passages, ledit revêtement intérieur de porte comportant un parapet intérieur de porte (7) et étant fixé sur la structure de carrosserie de porte (3), dans laquelle le revêtement intérieur de porte présente un module support (5) sur lequel les composants fonctionnels du dispositif d'ombrage (B) sont arrangés et qui est fixé sur la structure de carrosserie de porte (3),
**caractérisée en ce que**
le module support (5) présente sections de châssis pour l'arrangement de vitre auxquelles des rails de guidage (12) du dispositif d'ombrage (B) sont associés.

2. Porte de véhicule automobile selon la revendication 1, **caractérisée en ce que** le module support (5) présente le parapet intérieur de porte (7).

3. Porte de véhicule automobile selon l'une quelconque des revendications précédentes, **caractérisée en ce que** le module support (5) présente des points de palier ou des points de fixation pour un arbre enrouleur (13) d'une structure d'ombrage (9) ainsi que pour un système d'entraînement du dispositif d'ombrage (B).

4. Porte de véhicule automobile selon l'une quelconque des revendications précédentes, **caractérisée en ce que** le module support (5) est muni, sur un côté intérieur orienté vers un espace intérieur du véhicule, d'un arrangement de revêtement intérieur adapté à un revêtement intérieur du véhicule.

5. Porte de véhicule automobile selon l'une quelconque des revendications précédentes, **caractérisée en ce que** le module support (5) présente au moins un dispositif de retenue pour être fixé sur la structure de carrosserie de porte (3), en particulier de manière amovible.

6. Porte de véhicule automobile selon l'une quelconque des revendications précédentes, **caractérisée en ce que** le module support (5) est configuré sous forme de composant monobloc, dimensionnellement stable en matière plastique.
